# FASCICULE DE BREVET EUROPEEN

(11) **EP 2 391 803 B1**
(45) Date de publication et mention de la délivrance du brevet: **27.07.2016**
(21) Numéro de dépôt: 10701690.9
(22) Date de dépôt: 29.01.2010
(51) Int. Cl.: F01D 25/18, F02C 7/32, F02C 7/36

(54) **ENSEMBLE D'UN AGB ET D'UN RESERVOIR D'HUILE**
EIN NEBENAGGREGATGETRIEBE UND EINEN ÖLTANK ENTHALTENDE ANORDNUNG
ASSEMBLY INCLUDING AN AGB AND AN OIL TANK

(30) Priorité: 30.01.2009 FR 0950617
(43) Date de publication de la demande: 07.12.2011
(73) Titulaire: Hispano Suiza, 92707 Colombes Cedex (FR)
(72) Inventeur: BRANDT, Bernard, F-95150 Taverny (FR); COTIN, Frédéric, F-92400 Courbevoie (FR); DEPERROIS, André, Raymond, Christian, 75015 Paris (FR)
(74) Mandataire: Gevers & Orès
(86) Numéro de dépôt international: PCT/EP2010/051122
(87) Numéro de publication internationale: WO 2010/086422

(56) Documents cités:
- EP-A- 0 540 192
- EP-A- 1 298 296
- FR-A- 1 262 452
- GB-A- 758 206
- US-A- 2 618 119
- US-A1- 2005 279 102

## Description

L'invention concerne un ensemble d'un boîtier de relais d'accessoires et d'un réservoir d'un liquide de lubrification d'un turboréacteur.

Un turboréacteur comprend, d'amont en aval dans le sens de l'écoulement des gaz, une soufflante, un ou plusieurs étages de compresseurs, par exemple un compresseur haute pression et un compresseur basse pression, une chambre de combustion, un ou plusieurs étages de turbines, par exemple une turbine haute pression et une turbine basse pression, et une tuyère d'échappement des gaz. A chaque compresseur correspond une turbine, les deux étant reliés par un arbre, formant ainsi, par exemple, un corps haute pression et un corps basse pression.

Une partie de la puissance générée par un turboréacteur est utilisée pour alimenter en énergie différents équipements du turboréacteur. Cette puissance est prélevée mécaniquement sur l'arbre du corps haute pression (HP) du turboréacteur par un arbre de prise de mouvement qui entraîne un arbre d'entrée d'un boîtier de relais d'accessoires.

Le boîtier de relais d'accessoires est bien connu de l'homme du métier sous sa dénomination anglaise "Accessory Gear Box" (AGB). Il s'agit d'un boîtier contenant un engrenage (mécanisme) relié à un certain nombre d'équipements ou accessoires, comme par exemple un générateur électrique, un starter, un alternateur, des pompes hydrauliques, à carburant ou à huile, etc. Ces divers accessoires sont entraînés mécaniquement par l'engrenage de l'AGB qui leur transmet, par l'intermédiaire de l'arbre d'entrée dans l'AGB, la puissance prélevée sur l'arbre HP.

L'AGB comporte généralement un boîtier fabriqué par fonderie; il comporte ainsi une paroi de fonderie définissant un logement pour accueillir l'engrenage d'entraînement des accessoires. Chaque roue de l'engrenage est solidaire d'un arbre d'entraînement relié à un accessoire. Les différents accessoires entraînés par l'AGB sont montés directement sur le boîtier de fonderie, les arbres d'entraînement des accessoires passant au travers de la paroi de ce boîtier pour les entraîner.

Le moteur comporte par ailleurs un circuit de lubrification qui alimente en huile les différents organes du moteur qui en ont besoin. Le circuit de lubrification comprend plus spécifiquement un réservoir d'huile, un groupe de lubrification (qui entraîne l'huile en circulation dans le circuit) et des canalisations de transport de l'huile vers les organes à lubrifier. Le groupe de lubrification est généralement monté à proximité de l'AGB, puisqu'il est entraîné par lui.

Dans certains moteurs, pour des raisons de compacité et d'économie de canalisations, on préfère monter le réservoir d'huile directement sur l'AGB. On peut à cet effet former le réservoir d'huile par une excroissance de la pièce de fonderie formant le logement de l'AGB. Le problème de ce type de pièce de fonderie est la difficulté de sa conception et de sa fabrication; la fonderie est en effet une technique difficile à maîtriser et le coût d'une telle pièce avec une excroissance, complexe, est conséquent.

Dans d'autres moteurs, on a séparé le réservoir d'huile de l'AGB, ce qui permet de former l'AGB directement par usinage d'un lopin métallique. De telles pièces fabriquées directement par usinage sont couramment désignées par l'homme du métier par l'expression de pièces "usinées-masse" ou "taillées-masse", dont l'expression équivalente en anglais est "machined from solid". Plus précisément dans ce cas, l'AGB peut être formé selon une technologie dénommée "split-line" (expression anglaise dont la traduction littérale serait "ligne de partage"), dans laquelle deux demi-coquilles sont utilisées pour former le logement de l'AGB. Le réservoir d'huile, formé par fonderie, est alors déporté de l'AGB et doit être relié à lui, ce qui implique l'utilisation de canalisations de raccord entre eux.

L'invention vise à proposer un agencement plus simple pour un AGB et un réservoir d'huile, permettant de les fabriquer à moindre coût.

C'est ainsi que l'invention concerne selon la revendication un ensemble d'un boîtier de relais d'accessoires et d'un réservoir de liquide de lubrification d'un turboréacteur, le boîtier de relais d'accessoires comportant un engrenage relié à des arbres parallèles entre eux d'entraînement mécanique des accessoires, ensemble caractérisé par le fait qu'il comporte un boîtier avec deux compartiments et une cloison, perpendiculaire auxdits arbres, de séparation des compartiments, un

compartiment formant le boîtier de relais d'accessoires et un compartiment formant le réservoir de liquide, le boîtier présentant globalement une forme allongée et incurvée adaptée pour suivre la forme d'un carter cylindrique du turboréacteur sur lequel il est destiné à être fixé.

Grâce à l'invention, l'ensemble est intégré et donc compact, tandis que sa fabrication est simple du fait de l'agencement des compartiments par rapport aux arbres reliés à l'engrenage.

On comprend que, dans ce cas, le turboréacteur s'étendant globalement suivant un axe, l'engrenage du boîtier de relais d'accessoires est destiné à être entraîné par un arbre de prise de mouvement sensiblement perpendiculaire à l'axe du turboréacteur. Le document GB758206 décrit un boîtier de relais d'accessoires selon l'art antérieur.

On connaît les documents FR 1 262 452, US 2005/0279102 et EP 1 298 296 qui décrivent des ensembles d'un réservoir d'huile et d'un boîtier de relais d'accessoires disposés en extrémité du turboréacteur dans le prolongement de son arbre moteur. Ces ensembles ne sont pas adaptés pour être disposés le long du carter du turboréacteur.

Selon une forme de réalisation préférée, les compartiments sont fabriqués par usinage d'un bloc de matériau métallique. L'utilisation d'un tel procédé d'usinage d'un bloc de matériau signife que les compartiments sont formés sans opération de fonderie; autrement dit, ce type de procédé permet de fabriquer des pièces généralement désignées par les expressions "usinées-masse" ou "taillées-masse" ("machined from solid"). L'utilisation d'un tel procédé résout les problèmes énoncés plus haut au sujet de l'utilisation de la fonderie et est rendue possible par la configuration des compartiments de l'ensemble défini ci-dessus.

Selon une forme de réalisation préférée, les compartiments sont formées par deux demi-coquilles fixées l'une à l'autre.

Selon une forme de réalisation préférée, chaque demi-coquille comporte au moins une ouverture délimitée par un bord et les demi-coquilles sont fixées l'une à l'autre le long de ce bord, de préférence avec la cloison.

Selon une forme de réalisation préférée, l'ouverture de chaque demi-coquille présente des dimensions supérieures ou égales à celles de la projection, sur un plan perpendiculaire aux arbres d'entraînement, de l'engrenage du boîtier de relais d'accessoires.

Selon une forme de réalisation préférée, les demi-coquilles sont fixées l'une à l'autre, de préférence avec la cloison, de manière amovible, par exemple par vissage. Ainsi, il est possible de les désolidariser pour avoir accès à l'intérieur du compartiment formant le boîtier de l'AGB, pour en assurer la maintenance et l'entretien.

Selon une forme de réalisation préférée, la cloison est solidaire de manière non amovible de la demi-coquille formant réservoir de liquide de lubrification, par exemple soudée à elle.

Selon une forme de réalisation, les compartiments sont de forme allongée dans une direction globale perpendiculaire aux arbres d'entraînement des accessoires.

Selon une forme de réalisation préférée, le compartiment formant réservoir de liquide de lubrification forme également support d'au moins certains des accessoires entraînés par le boîtier de relais d'accessoires.

Selon une forme de réalisation préférée dans ce cas, les arbres d'entraînement desdits accessoires s'étendant au moins en partie dans le compartiment formant réservoir, des tubes de protection, au sein desquels s'étendent lesdits arbres, sont montés dans le réservoir.

L'invention sera mieux comprise à l'aide de la description suivante de la forme de réalisation préférée de l'ensemble d'un AGB et d'un réservoir de l'invention, en référence aux planches de dessins annexées, sur lesquelles:
- la figure 1 représente une vue filaire en perspective de la forme de réalisation préférée de l'ensemble de l'invention et
- la figure 2 représente une vue en coupe de l'ensemble de la figure 1 dans un plan perpendiculaire à sa cloison de séparation des deux compartiments.

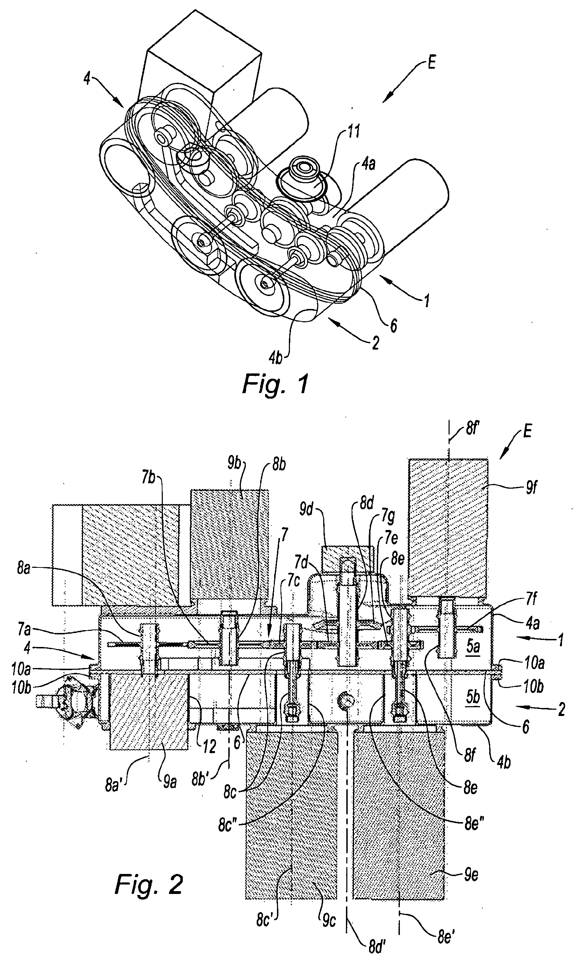

L'invention est décrite en référence à un turboréacteur. Le turboréacteur comporte un corps haute pression et un corps basse pression, chaque corps comprenant un compresseur et une turbine, de manière classique. Sur le corps haute pression est monté un mécanisme de prise de mouvement entraînant un arbre de prise de mouvement relié mécaniquement à un boîtier de relais d'accessoires 1 ci-après désigné par son acronyme anglais AGB 1 pour "Accessory Gear Box". Plus précisément, l'arbre de prise de mouvement transmet le mouvement de l'arbre rotatif du corps haute pression à un arbre d'entrée (ou d'entraînement) de l'AGB 1. L'arbre d'entrée de l'AGB 1 est relié à l'AGB 1 par une pièce de raccord 11 fixée sur une paroi de l'AGB, en l'espèce sur la paroi supérieure de la figure 1. L'arbre d'entrée, supporté par la pièce de raccord 11, passe au travers de la paroi supérieure de l'AGB 1, de manière classique.

Le turboréacteur comporte par ailleurs un circuit de lubrification comprenant un réservoir d'huile 2, un groupe de lubrification 9a (non représenté sur la figure 1 mais visible sur la figure 2) et des canalisations de transport de l'huile vers les organes à lubrifier, non représentées. Le groupe de lubrification 9a comporte en l'espèce une pompe d'alimentation en huile d'une canalisation principale à partir de laquelle l'huile est guidée pour alimenter l'ensemble des canalisations d'alimentation en huile des différents organes du moteurs, ces canalisations étant directement ou indirectement reliées à la canalisation principale. Le groupe de lubrification 9a comporte en outre une pluralité de pompes - en l'espèce quatre pompes - qui aspirent l'huile récupérée (généralement par gravité) dans les organes du turboréacteur qui ont été lubrifiés; l'huile ainsi récupérée est réintroduite dans le réservoir d'huile 2 d'où elle est puisée pour alimenter la canalisation principale du circuit. Le circuit de lubrification alimente en huile de lubrification les organes ou équipements du moteur qui en ont besoin, par exemple les paliers des arbres du moteur ou l'engrenage de l'AGB 1.

En référence à la figure 1, l'AGB 1 et le réservoir d'huile 2 sont agencés pour former un ensemble intégré E. Cet ensemble E comporte un boîtier 4 formé par deux demi-coquilles 4a, 4b définissant un premier compartiment 5a et un deuxième compartiment 5b, respectivement, les deux compartiments 5a, 5b étant séparés par une cloison 6.

Le premier compartiment 5a forme l'AGB 1. A cet effet, il ménage un logement pour un engrenage 7 (ou mécanisme 7) mécaniquement relié à l'arbre d'entrée de l'AGB 1, l'engrenage 7 étant agencé pour transmettre les mouvements de l'arbre d'entrée de l'AGB 1 à des accessoires 9a, 9b, 9c, 9d, 9e, 9f du turboréacteur. L'engrenage 7 comporte une pluralité de roues dentées 7a, 7b, 7c, 7d, 7d, 7e, 7f solidaires d'une pluralité d'arbres 8a, 8b, 8c, 8d, 8e, 8f d'entraînement des accessoires 9a, 9b, 9c, 9d, 9e, 9f, respectivement. Il comporte en outre une roue dentée 7g, en l'espèce un pignon conique 7g solidaire de l'un des arbres 8d, qui engrène avec un pignon conique solidaire de l'arbre d'entrée de l'AGB 1 pour l'entraînement de l'ensemble des roues 7a-7f de l'engrenage 7 par l'arbre d'entrée de l'AGB 1. Chaque arbre d'entraînement 8a, 8b, 8c, 8d, 8d, 8e, 8f s'étend suivant un axe 8', 8b', 8c', 8d', 8d', 8e', 8f. Les arbres 8a-8f sont disposés parallèlement les uns aux autres, de manière classique dans un AGB 1. En l'espèce, les accessoires comportent le groupe de lubrification 9a, une pompe de carburant 9b, un démarreur à air 9c, un générateur basse puissance 9d tel qu'un moteur à aimants permanents, un starter-générateur 9e et une pompe hydraulique 9f; ces accessoires 9a-9f sont donnés à titre d'exemple.

Le deuxième compartiment 5b sert de réservoir à l'huile du circuit de lubrification; autrement dit, il forme le réservoir d'huile 2 de ce circuit. Il forme une enceinte fermée dans laquelle repose l'huile.

La cloison 6 de séparation entre les deux compartiments 5a, 5b est fixée entre les deux demi-coquilles 4a, 4b formant les compartiments 5a, 5b et interdit toute communication fluidique entre eux, pour éviter que l'huile du réservoir 2 ne vienne s'écouler indûment dans le compartiment 5a de l'AGB 1. La cloison 6 s'étend perpendiculairement aux arbres 8a, 8b, 8c, 8d, 8e, 8f.

L'ensemble E de l'AGB 1 et du réservoir d'huile 2 est en l'espèce de forme globalement allongée. Plus précisément, le boîtier 4 de l'ensemble E présente globalement une forme allongée et incurvée, en l'espèce adaptée pour suivre la forme d'un carter (cylindrique) du turboréacteur sur lequel il est destiné à être fixé. L'homme du métier parle fréquemment de forme en "banane" ou en "haricot"; il s'agit plus précisément d'une forme avec des faces (avant et arrière sur la figure 1), perpendiculaires aux arbres et d'entraînement 8a-8f, qui sont planes et parallèles entre elles; ces faces (avant et arrière) sont reliées par des faces (inférieure et supérieure sur la figure 1) chacune en forme de portion de cylindre; les extrémités du boitier 4 sont formées par des faces incurvées reliant continûment les faces cylindriques entre elles. La grande dimension (moyenne) de l'ensemble E est perpendiculaire aux arbres 8a-8f d'entraînement des accessoires 9a-9f.

Chaque demi-coquine 4a, 4b présente une ouverture sur la totalité d'une face qui est perpendiculaire aux arbres 8a-8f d'entraînement des accessoires 9a-9f. L'ouverture de chaque demi-coquille 4a, 4b est délimitée par un bord 10a, 10b se présentant ici sous la forme d'une bride 10a, 10b, respectivement; ainsi, cette bride 10a, 10b s'étend perpendiculairement aux arbres d'entraînement 8a-8f. Les demi-coquilles 4a, 4b sont fixées l'une à l'autre le long de ces brides 10a, 10b, en l'espèce par vissage. La cloison de séparation 6 est également fixée à l'ensemble E par vissage; en l'espèce, les mêmes vis permettent la fixation des brides 10a, 10b entre elles et à la périphérie de la cloison de séparation 6 qui est enserrée entre les brides 10a, 10b.

Grâce à la configuration de l'ensemble E avec une cloison de séparation 6 perpendiculaire aux arbres 8a-8f, il est possible de fabriquer à la fois l'AGB 1 et le réservoir d'huile 2 par un procédé d'usinage d'un bloc de matériau métallique, par exemple un lopin métallique, par exemple en aluminium, en titane ou en magnésium. Un tel procédé d'usinage est beaucoup moins onéreux à mettre en oeuvre qu'un procédé de fabrication par fonderie. En quelque sorte, il s'agit d'un procédé permettant d'obtenir un boîtier 4 construit en "split-line", avec deux compartiments, séparés par une cloison, remplissant des fonctions distinctes.

Dans la mesure où la cloison de séparation 6 est perpendiculaire aux arbres d'entraînement 8a-8f, cela signifie que l'ouverture des demi-coquilles 4a, 4b formant l'AGB 1 et le réservoir d'huile 2 présentent des dimensions suffisantes pour permettre la mise en oeuvre d'un procédé d'usinage et notamment permettre le passage des outils d'usinage, par exemple des outils de fraisage. En particulier, les ouvertures présentent ici des dimensions correspondant à l'image projetée de l'ensemble de l'engrenage 7 que doit contenir l'AGB 1 sur un plan perpendiculaire aux arbres d'entraînement 7, par exemple sur un plan moyen de la cloison de séparation 8; cette image projetée ou projection correspond à l'encombrement transversal, par rapport aux axes 8a'-8f' des arbres d'entraînement 8a-8f, de l'engrenage 7 de l'AGB 1.

Selon une forme de réalisation alternative non représentée, la cloison de séparation 6 est fixée de manière solidaire et non amovible à la demi-coquille 4b formant le réservoir d'huile 2; une telle fixation peut par exemple être mise en oeuvre par soudage. L'avantage d'une telle solution est le suivant. Il peut parfois être nécessaire de démonter l'ensemble E d'un AGB 1 et d'un réservoir 2 pour procéder à des opérations de maintenance sur l'engrenage 7 de l'AGB 1. De telles opérations ne sont en revanche pas nécessaires sur le réservoir d'huile 2. Dès lors, il est possible que la cloison 6 soit solidaire de manière fixe du réservoir d'huile 2 mais fixée (avec le réservoir d'huile 2) de manière amovible à la demi-coquille 4a formant l'AGB 1.

En référence à la figure 2 (mais pas à la figure 1 où ils n'ont pas été représentés), certains accessoires 9a, 9c, 9e sont montés directement sur la demi-coquille 4b formant le réservoir d'huile 2. Plus spécifiquement, le groupe de lubrification 9a est monté, pour partie, directement dans le volume du réservoir d'huile 2 (dans une chemise de protection 12); ainsi, les pompes du groupe de lubrification 9a aspirent ou déversent directement de l'huile dans le réservoir 2. Le démarreur à air 9c et le starter-générateur 9e sont montés sur la paroi de la demi-coquille 4b qui fait face à la cloison de séparation 6 et s'étend donc perpendiculairement à leurs arbres d'entraînement 8a-8f (il s'agit de la paroi avant sur la figure 1). Ces arbres d'entraînement 8c, 8e traversent donc le volume du compartiment 5b formant le réservoir d'huile 2; pour que le fait que ces arbres 8c, 8e s'étendent dans le compartiment 5b ne soit pas un problème, des tubes de protection 8c", 8e" sont montés dans le compartiment 5b, entre la cloison de séparation 6 et la paroi opposée de la demi-coquille 4b, pour recevoir les arbres d'entraînement 8c, 8e qui s'étendent donc au sein de ces tubes de protection 8c'. 8e', les tubes de protection interdisant tout contact direct entre les arbres d'entraînement 8c, 8e et l'huile contenue dans le réservoir 2.

## Revendications

1. Ensemble d'un boîtier (1) de relais d'accessoires (9a-9f) et d'un réservoir (2) de liquide de lubrification pour un turboréacteur, le boîtier (1) de relais d'accessoires (9a-9f) comportant un engrenage (7) relié à des arbres (8a-8f) parallèles entre eux d'entraînement mécanique des accessoires (9a-9f), l'ensemble comportant un boîtier (4) avec deux compartiments (5a, 5b) et une cloison (6), perpendiculaire auxdits arbres (8a-8f), de séparation des compartiments (5a, 5b), un compartiment (5a) formant le boîtier (1) de relais d'accessoires (9a-9f) et un compartiment (5b) formant le réservoir de liquide (2), l'ensemble étant **caractérisé par le fait que** le boîtier (4) est de type banane en ayant une forme allongée et incurvée, adaptée pour suivre la forme d'un carter cylindrique du turboréacteur sur lequel il est destiné à être fixé.

2. Ensemble selon la revendication 1 dans lequel, le turboréacteur s'étendant globalement suivant un axe, l'engrenage (7) du boîtier (1) de relais d'accessoires (9a-9f) est agencé de manière à être entraîné par un arbre de prise de mouvement sensiblement perpendiculaire à l'axe du turboréacteur.

3. Ensemble selon l'une des revendications 1 à 2, dans lequel les compartiments (5a, 5b) sont fabriqués par usinage d'un bloc de matériau métallique.

4. Ensemble selon l'une des revendications 1 à 3, dans lequel les compartiments (5a, 5b) sont formés par deux demi-coquilles (4a, 4b) fixées l'une à l'autre.

5. Ensemble selon la revendication 4, dans lequel les demi-coquilles (4a, 4b) sont fixées l'une à l'autre, de préférence avec la cloison, de manière amovible, par exemple par vissage.

6. Ensemble selon l'une des revendications 4 et 5, dans lequel la cloison (6) est solidaire de manière non amovible de la demi-coquille (4b) formant réservoir (2) de liquide de lubrification, par exemple soudée à elle.

7. Ensemble selon l'une des revendications 1 à 6, dans lequel le boîtier (4) est de forme globalement allongée dans une direction globale perpendiculaire aux arbres (8a-8f) d'entraînement des accessoires (9a-9f).

8. Ensemble selon l'une des revendications 1 à 7, dans lequel le compartiment (5b) formant réservoir (2) de liquide de lubrification forme également support d'au moins certains des accessoires (9a, 9c, 9e) entraînés par le boîtier (1) de relais d'accessoires (9a-9f).

9. Ensemble selon la revendication 8, dans lequel les arbres (8c, 8e) d'entraînement desdits accessoires (9c, 9e) s'étendant au moins en partie dans le compartiment (5b) formant réservoir (2), des tubes de protection (8c", 8e"), au sein desquels s'étendent lesdits arbres (8c, 8e), sont montés dans le réservoir (2).

## Patentansprüche

1. Eine Einheit aus einem Gehäuse (1) von Hilfsgeräteträger (9a-9f) und einem Tank (2) für Schmierflüssigkeit eines Turboreaktors, wobei das Gehäuse (1) von Hilfsgeräteträger (9a-9f) zum mechanischen Antrieb des Zubehörs (9a-9f) ein Getriebe (7) umfasst, welches mit untereinander parallelen Wellen (8a-8f) verbunden ist, und wobei die Einheit ein Gehäuse (4) mit zwei Abteilen (5a, 5b) und einer Trennwand (6) umfasst, die zu den besagten Wellen (8a-8f) senkrecht steht und zur Abtrennung der Abteile (5a, 5b) dient, wobei ein Abteil (5a) das Gehäuse (1) von Hilfsgeräteträger (9a-9f) und ein Abteil (5b) den Flüssigkeitstank (2) bildet, und wobei die Einheit **dadurch gekennzeichnet ist, dass** besagtes Gehäuse (4) bananenförmig ist, das heißt eine längliche und gekrümmte Form aufweist, die geeignet ist, die Form eines zylindrischen Gehäuses des Turboreaktors, auf dem die Einheit befestigt werden soll, nachzuvollziehen.

2. Einheit gemäß Anspruch 1, in der das Getriebe (7) des Gehäuses (1) von Hilfsgeräteträger (9a-9f) so angeordnet ist, dass es durch eine Antriebswelle angetrieben wird, die spürbar senkrecht zur Achse des Turboreaktors steht, wobei sich der Turboreaktor im Wesentlichen entlang einer Achse erstreckt.

3. Einheit gemäß einem der Ansprüche 1 bis 2, in der die Abteile (5a, 5b) durch spanabhebendes Bearbeiten eines Metallblocks hergestellt werden.

4. Einheit gemäß einem der Ansprüche 1 bis 3, in der die Abteile (5a, 5b) von zwei, aneinander befestigten Halbschalen (4a, 4b) gebildet werden.

5. Einheit gemäß Anspruch 4, in der die Halbschalen (4a, 4b) beispielsweise durch Verschraubung aneinander, vorzugsweise mit der Trennwand lösbar befestigt sind.

6. Einheit gemäß einem der Ansprüche 4 und 5, in der die Trennwand (6) beispielsweise durch Anschweißen unlösbar mit der Halbschale (4b) verbunden ist, die den Flüssigkeitstank (2) bildet.

7. Einheit gemäß einem der Ansprüche 1 bis 6, in der das Gehäuse (4) im Wesentlichen eine längliche Form aufweist, und sich global in eine Richtung erstreckt, die zu den Antriebswellen (8a-8f) der Hilfsgeräte (9a-9f) senkrecht ist.

8. Einheit gemäß einem der Ansprüche 1 bis 7, in der das den Tank (2) für das Schmiermittel bildende Abteil (5b) ebenfalls als Träger von mindestens einigen der Hilfsgeräte (9a, 9c, 9e) dient, die vom Gehäuse (1) von Hilfsgeräteträger (9a-9f) angetrieben werden.

9. Einheit gemäß Anspruch 8, in der die Antriebswellen (8c, 8e) der besagten Hilfsgeräte (9c, 9e) sich mindestens teilweise in das, den Tank (2) bildende Abteil (5b) erstrecken, wobei Schutzrohre (8c", 8e") im Tank (2) montiert sind, in die sich die besagten Antriebswellen (8c, 8e) erstrecken.

## Claims

1. An assembly comprising an accessory (9a-9f) gearbox (1) and a reservoir (2) of lubricant for a turbojet engine, the accessory (9a-9f) gearbox (1) comprising gearing (7) connected to mutually parallel shafts (8a-8f) that mechanically drive the accessories (9a-9f), the assembly comprising a box (4) with two compartments (5a, 5b) and a partition (6), perpendicular to said shafts (8a-8f), that separates the compartments (5a, 5b), one compartment (5a) forming the accessory (9a-9f) gearbox (1) and one compartment (5b) forming the lubricant reservoir (2), the assembly being **characterized in that** the box (4) is of banana-type having a shape that is elongated and curved, designed to follow the shape of a cylindrical casing of the turbojet engine to which it is intended to be fixed.

2. The assembly as claimed in claim 1, in which, with the turbojet engine extending generally along an axis, the gearing (7) of the accessory (9a-9f) gearbox (1) is intended to be driven by a power take-off shaft substantially perpendicular to the axis of the turbojet engine.

3. The assembly as claimed in one of claims 1 to 2, in which the compartments (5a, 5b) are manufactured by machining from a solid block of metal.

4. The assembly as claimed in one of claims 1 to 3, in which the compartments (5a, 5b) are formed of two half-shells (4a, 4b) fixed together.

5. The assembly as claimed in claim 4, in which the half-shells (4a, 4b) are fixed together, preferably with the partition, removably, for example by screw-fastening.

6. The assembly as claimed in one of claims 4 and 5, in which the partition (6) is secured nonremovably to the half-shell (4b) that forms the lubricant reservoir (2), for example is welded thereto.

7. The assembly as claimed in one of claims 1 to 6, in which the box (4) is of a shape that is generally elongate in a general direction perpendicular to the accessory (9a-9f) drive shafts (8a - 8f).

8. The assembly as claimed in one of claims 1 to 7, in which the compartment (5b) that forms the lubricant reservoir (2) also acts as a support for at least some of the accessories (9a, 9c, 9e) driven by the accessory (9a-9f) gearbox (1).

9. The assembly as claimed in claim 8, in which, with the drive shafts (8c, 8e) that drive said accessories (9c, 9e) extending at least partially into the compartment (5b) that forms the reservoir (2), protective tubes (8c", 8e"), along which said shafts (8c, 8e) extend, are mounted in the reservoir (2).
